# FASCICULE DE BREVET EUROPEEN

(11) **EP 3 063 028 B1**
(45) Date de publication et mention de la délivrance du brevet: **01.01.2020**
(21) Numéro de dépôt: 14759017.8
(22) Date de dépôt: 30.07.2014
(51) Int. Cl.: B60J 10/265, B60J 10/30, B60J 10/70

(54) **VITRAGE A JOINT PROFILE ET ENJOLIVEUR, ENJOLIVEUR ET PROCEDE DE FABRICATION DU VITRAGE**
GLASSCHEIBE MIT EINER STRUKTURDICHTUNG UND EINEM VERKLEIDUNGSTEIL, VERKLEIDUNGSTEIL UND VERFAHREN ZUR HERSTELLUNG DER GLASSCHEIBE
GLASS PANEL HAVING A STRUCTURAL GASKET AND A TRIM ELEMENT, TRIM ELEMENT AND METHOD FOR MANUFACTURING THE GLASS PANEL

(30) Priorité: 01.08.2013 FR 1357658
(43) Date de publication de la demande: 07.09.2016
(73) Titulaire: Saint-Gobain Glass France, 92400 Courbevoie (FR)
(72) Inventeur: GONNET, Romain, F-60610 Lacroix Saint Ouen (FR); JAMET, Vincent, F-93300 Aubervilliers (FR)
(74) Mandataire: Saint-Gobain Recherche
(86) Numéro de dépôt international: PCT/FR2014/051975
(87) Numéro de publication internationale: WO 2015/015119

(56) Documents cités:
- EP-A1- 1 944 182
- EP-A2- 0 419 072
- WO-A1-00/06406
- DE-U1-202010 001 223
- FR-A1- 2 340 217
- FR-A5- 2 104 314

## Description

La présente invention concerne un vitrage comprenant un élément vitré, au moins une portion de joint profilé et au moins un enjoliveur présentant une forme allongée qui s'étend selon un bord dudit élément vitré et présentant en section transversale une forme générale avec une base et au moins une aile s'étendant à partir de ladite base, ladite base étant située, lorsque l'enjoliveur est installé sur le vitrage, au-dessus d'une face extérieure de ladite portion de joint profilé et ledit enjoliveur étant fixé à ladite portion de joint profilé sans élément de fixation intermédiaire.

La présente invention concerne également un enjoliveur pour un tel vitrage et le procédé de fabrication du vitrage correspondant.

Dans tout le présent document, l'expression « enjoliveur » désigne un accessoire du vitrage, en particulier un accessoire de forme allongée ; elle ne désigne pas un élément de carrosserie de véhicule. Un tel enjoliveur est utilisé pour distinguer visuellement le bord du vitrage, vu de l'extérieur ; il présente souvent une apparence métallique brillante (« chromée ») ou une apparence colorée.

Il est connu d'utiliser des enjoliveurs constitués de profilés en forme de U qui viennent se fixer par clipage sur des clips intermédiaires qui sont eux-mêmes attachés au cordon profilé qui est réalisé par exemple en un polymère souple et qui est présent en périphérie du vitrage.

L'art antérieur connaît à ce titre la demande brevet français N° FR 2 340 217. Dans ce document le clip intermédiaire est une agrafe.

Il est connu par ailleurs, notamment de certaines variantes présentées dans la demande de brevet européen N° EP 1 944 182, de fixer directement un enjoliveur à un cordon profilé, sans clip intermédiaire.

Ce document divulgue qu'au moins un élément de rétention, notamment en forme de flèche, peut être introduit dans un trou ménagé en face extérieure de la portion de joint, ce trou pouvant déboucher sur la face intérieure de la portion de joint ; toutefois, cet élément de rétention se situe, dans sa position finale, à l'intérieur de la portion de joint : il ne traverse pas complètement la portion de joint et ne vient pas au contact de la face intérieure de la portion de joint.

Cette solution présente l'avantage de pouvoir être adoptée lorsque l'espace disponible entre la périphérie du vitrage et la carrosserie adjacente est faible.

Toutefois, la fixation de l'enjoliveur par cet élément de rétention n'est pas suffisamment fiable : même si plusieurs éléments de rétention sont prévus, l'enjoliveur peut être facilement retiré car il suffit d'appliquer un mouvement dans la même direction mais dans le sens contraire du mouvement d'introduction des éléments de rétention dans les trous.

Le document DE 20 2010 001 223 U1 divulgue un vitrage selon le préambule de la revendication 1.

La présente invention a pour but de remédier aux inconvénients de la technique antérieure en proposant un enjoliveur qui peut être fixé d'une manière amovible de manière simple, rapide et fiable à une portion de joint et en particulier lorsque l'espace disponible entre la périphérie du vitrage et la carrosserie adjacente est faible.

Un but particulier de l'invention est de permettre que l'enjoliveur ne puisse pas être désassemblé du vitrage tant que le vitrage est fixé à la carrosserie du véhicule.

La présente invention repose ainsi sur une solution selon laquelle l'enjoliveur est pourvu d'au moins une patte ajourée et, avant la fixation du vitrage à la carrosserie, cette patte est passée à travers un trou ménagé dans le cordon profilé et traversant complètement le cordon profilé, cette patte ajourée étant ensuite pliée pour être appliquée sous la portion de joint ou sous l'élément vitré.

La patte ajourée, ainsi que l'aile qui la porte, appartiennent ainsi toutes les deux à l'enjoliveur ; La patte ajourée, ainsi que l'aile qui la porte sont venues de matière avec la base de l'enjoliveur.

Un avantage important de l'invention est constitué par le fait que la patte ajourée selon l'invention, après avoir été pliée, ou rabattue, présente un encombrement très faible, en particulier si elle est rabattue dans un creux correspondant du cordon profilé. Ainsi, l'invention est particulièrement recommandée lorsque l'espace disponible entre le chant de l'élément vitré et la carrosserie adjacente est réduit.

La présente invention se rapporte ainsi à un vitrage selon la revendication 1. Ce vitrage comprend un élément vitré, au moins une portion de joint profilé, au moins un enjoliveur présentant une forme allongée qui s'étend selon un bord dudit élément vitré et qui présente en section transversale une forme générale avec une base et au moins une aile s'étendant à partir de ladite base, ladite base étant située au-dessus d'une face extérieure de ladite portion de joint profilé, ce vitrage étant remarquable en ce que, vu en coupe transversale (c'est-à-dire transversalement par rapport à ladite direction allongée), une aile comporte à une extrémité opposée à ladite base au moins une patte ajourée qui traverse ladite portion de joint profilé par un trou débouchant sur une face extérieure et sur une face intérieure de ladite portion de joint profilé, ladite patte ajourée étant rabattue sous ladite portion de joint profilé ou sous ledit élément vitré.

Selon l'invention, la patte ajourée de l'enjoliveur est ainsi introduite par l'entrée du trou qui se situe en face extérieure de la portion du joint et cette patte ressort ensuite du trou par la face intérieure de la portion de joint, afin de pouvoir être rabattue contre cette face intérieure de ladite portion de joint profilé ou contre une face intérieure dudit élément vitré et permettre de maintenir l'enjoliveur sous la portion de joint profilé afin qu'il reste bien positionné au-dessus de la portion de joint profilé.

La patte ajourée forme une protubérance, localisée, sur le bord de l'aile de l'enjoliveur qui la porte.

Ainsi, l'enjoliveur est fixé à ladite portion de joint profilé directement, sans élément de fixation intermédiaire et la fixation amovible de l'enjoliveur est simple et fiable.

La patte ajourée comporte un jour, c'est-à-dire un trou, qui traverse de part en part l'épaisseur de la patte ; toute la périphérie du trou est entourée de matière de la patte. Ce trou est de préférence au centre de la patte et la périphérie du trou est ainsi entourée d'une bande de matière de la patte et cette périphérie présente une largeur sensiblement identique autour de la moitié au moins de la périphérie du trou.

De préférence, l'aile comporte à une extrémité opposée à ladite base plusieurs pattes ajourées qui traversent toutes ladite portion de joint profilé, chacune par un trou débouchant sur une face extérieure et sur une face intérieure de ladite portion de joint profilé, chaque patte ajourée étant rabattue sous ladite portion de joint profilé ou sous ledit élément vitré.

Ladite patte ajourée, ou chaque patte ajourée, est, de préférence, dans le prolongement de ladite aile, afin de faciliter la fabrication dudit enjoliveur ; cette patte ajourée, ou chaque patte ajourée, est, de préférence venue de matière avec ladite aile ; l'enjoliveur est, de préférence, en une pièce de métal unique, constitué d'une feuille métallique simple (non doublée), pliée, cette pièce de métal étant en outre ajourée.

Ladite patte ajourée, ou chaque patte ajourée, peut s'étendre en forme d'arc de couronne ou en forme de rectangle ajouré ou de carré ajouré afin de faciliter la préhension de la patte pour la rabattre sous la portion de joint profilé ou l'élément vitré ; en outre, de préférence, dans le cas d'un rectangle ou d'un carré, les coins sont arrondis pour augmenter la capacité de retenue de ladite patte.

Pour que la fixation de l'enjoliveur soit suffisamment fiable, il est préférable que ladite patte ajourée, ou chaque patte ajourée présente une longueur comprise entre 1 et 5 fois sa largeur, la longueur étant considérée ici selon la direction allongée de l'enjoliveur.

Il est possible que ladite portion de joint profilé présente en face intérieure un creux de forme complémentaire d'un pourtour de ladite patte ajourée rabattue sous ladite portion de joint profilé, afin que lorsque la patte ajourée a été rabattue contre la face intérieure de la portion de joint, cette patte ne forme pas une surépaisseur plus à l'intérieur que le reste de la face intérieure de la portion de joint. Ainsi, vu en coupe transversale, l'encombrement de la patte ajourée est « caché » dans l'épaisseur du reste de la portion de joint de chaque côté de la patte ajourée.

Dans cette éventualité, il est possible que ledit creux comporte une bosse de contour complémentaire d'un jour de ladite patte ajourée afin d'augmenter encore plus la capacité de maintien de la patte ajourée.

La base et l'aile au moins qui comporte au moins une patte ajourée présentent chacune une forme de plaque allongée. La base est de préférence pleine, sans ajour.

La base et l'aile au moins qui comporte au moins une patte ajourée sont orientées l'une par rapport à l'autre d'un angle non nul qui est de préférence proche de l'angle droit ; cet angle peut être compris, lorsque l'enjoliveur est vu en coupe, entre 60° et 120° ; cet angle peut être arrondi. Par exemple, l'enjoliveur peut alors présenter en coupe une forme générale de L avec un angle arrondi entre l'aile unique et la base.

Lorsque l'enjoliveur comporte deux ailes dont une au moins voire les deux comporte(nt) au moins une patte ajourée, l'angle entre chaque aile et la base est un angle non nul qui peut être proche de l'angle droit ; chaque angle peut être compris, lorsque l'enjoliveur est vu en coupe, entre 60° et 120° ; chaque angle peut être arrondi. Par exemple, l'enjoliveur peut alors présenter en coupe une forme générale de U avec un angle arrondi entre chaque aile et la base.

Ce U est positionné à l'envers sur ou au-dessus de la portion de joint profilé (c'est-à-dire sur ou au-dessus de la face extérieure de la portion de joint profilé) avec une partie creuse du U orientée vers ladite portion de joint profilé.

De préférence, une partie de face intérieure de la base du U de l'enjoliveur est en contact avec une partie de la face extérieure de la portion de joint profilé, notamment le long d'une partie la plus à l'extérieure d'un bossage de la portion de joint profilé.

L'aile, ou les ailes, s'étend(ent) à partir de la base ; la base et l'aile ou les ailes sont ainsi liées entre elles afin de former l'enjoliveur.

Lorsque l'enjoliveur comporte deux ailes, l'aile distale est l'aile de l'enjoliveur qui est le plus éloignée de l'élément vitré à l'état monté.

Selon l'invention, lorsque la patte ajourée est rabattue, cela forme un pli ; ainsi, en coupe transversale de l'enjoliveur, il y a un angle entre la patte ajourée rabattue et l'aile qui comporte cette patte ajourée. Cet angle est non nul et est de préférence proche de l'angle droit ; cet angle peut être compris, lorsque l'enjoliveur est vu en coupe après rabat, entre 60° et 120° ; cet angle peut être arrondi.

Dans une première variante, indépendante, vu en coupe transversale, en particulier à l'endroit de la présence d'une patte ajourée, ledit enjoliveur présente une forme générale de U, avec une première aile qui comporte au moins une patte ajourée et une seconde aile du U qui pénètre dans une cavité (différente du trou dans lequel pénètre la patte ajourée) ménagée sur la face extérieure de ladite portion de joint profilé, ladite cavité ne débouchant pas sur la face intérieure de ladite portion de joint profilé afin de réaliser avec cette cavité un support de contre-réaction lorsque la patte ajourée est rabattue contre la face intérieure de la portion de joint ou contre l'élément vitré.

Dans cette première variante, il est possible que ladite seconde aile soit proximale, c'est-à-dire la plus proche de l'élément vitré à l'état monté, et que ladite première aile soit distale, c'est-à-dire la plus éloignée de l'élément vitré à l'état monté, afin que l'aile distale soit plus facile à rabattre sous ladite portion de joint profilé ; toutefois, il est aussi possible de réaliser l'inverse.

Dans une seconde variante, indépendante, vu en coupe transversale, en particulier à l'endroit de la présence d'une patte ajourée, ledit enjoliveur présente une forme générale de L, avec la base qui pénètre dans une cavité ménagée sur la face extérieure de ladite portion de joint profilé et ne débouchant pas sur la face intérieure de ladite portion de joint profilé. Cette cavité réalise aussi un support de contre-réaction lorsque la patte ajourée est rabattue contre la face intérieure de la portion de joint ou contre l'élément vitré.

Dans une troisième variante, indépendante, vu en coupe transversale, en particulier à l'endroit de la présence d'une patte ajourée, ledit enjoliveur présente une forme générale de U, avec
- une première aile qui comporte à une extrémité opposée à ladite base au moins une première patte ajourée, ladite première patte ajourée traversant ladite portion de joint profilé par un trou débouchant sur une face extérieure et sur une face intérieure de ladite portion de joint profilé, ladite première patte ajourée étant rabattue sous ladite portion de joint profilé ou sous ledit élément vitré, et
- une seconde aile qui comporte à une extrémité opposée à ladite base au moins une seconde patte ajourée, ladite seconde patte ajourée traversant ladite portion de joint profilé par un trou débouchant sur une face extérieure et sur une face intérieure de ladite portion de joint profilé, ladite seconde patte ajourée étant rabattue sous ladite portion de joint profilé ou sous ledit élément vitré,
la patte ajourée de la seconde aile étant, de préférence, rabattue dans un sens opposé de la patte ajourée de la première aile.

Ainsi, dans cette troisième variante, les pattes ajourées s'opposent à toute rotation de l'enjoliveur sur lui-même ; le maintien étant le plus fort lorsque deux pattes ajourées sont rabattues en sens opposé.

Dans cette troisième variante, vue en coupe transversale, la première aile est située à une première extrémité de la base et la seconde aile est située à une seconde extrémité de la base, à l'opposé de la première extrémité de la base.

Ces trois variantes ne sont pas exclusives l'une de l'autre car il est possible qu'un enjoliveur comporte une variante à un endroit et une autre variante à un autre endroit, voire encore une autre variante à un autre endroit.

De préférence par ailleurs, vu en coupe transversale, une face intérieure dudit enjoliveur est située contre un bossage réalisé en face extérieure de ladite portion de joint profilé afin de réaliser un support de contre-réaction lorsque la patte est rabattue contre la face intérieure de la portion de joint ou contre l'élément vitré.

Il est possible aussi que l'enjoliveur comporte plus de deux ailes ; par exemple, l'enjoliveur peut présenter une forme générale de U avec environ au milieu de la base, une troisième aile s'étendant à partir de la base, du même côté que les deux autres. Il est possible de munir cette troisième aile d'une patte ajourée ou de plusieurs pattes ajourées. Eventuellement, seule cette troisième aile comporte des pattes ajourées. Si plusieurs pattes ajourées sont utilisées, il est possible de rabattre au moins une patte ajourée en direction de l'élément vitré et au moins une patte ajourée à l'opposé de l'élément vitré afin d'obtenir un meilleur maintien de l'enjoliveur.

La présente invention se rapporte aussi à un procédé de fabrication d'un vitrage suivant l'invention, ledit vitrage comprenant un élément vitré, au moins une portion de joint profilé, au moins un enjoliveur présentant une forme allongée qui s'étend selon un bord dudit élément vitré et présentant en section transversale une forme générale avec une base et au moins une aile s'étendant à partir de ladite base, ce procédé étant remarquable en ce que ladite portion de joint profilé présente un trou formé préalablement et débouchant sur une face extérieure et sur une face intérieure de ladite portion de joint profilé et en ce que, vu en coupe transversale (par rapport à ladite direction allongée), une aile comporte à une extrémité opposée à ladite base au moins une patte ajourée qui est introduite dans ledit trou préalablement formé de ladite portion de joint profilé et qui est ensuite rabattue sous ladite portion de joint profilé ou sous ledit élément vitré ; ladite patte est ainsi rabattue contre ladite face intérieure de la portion de joint profilé ou contre une face intérieure dudit élément vitré.

Le trou de la portion de joint dans lequel est introduit la patte ajourée est de préférence formé lors de la fabrication de ladite portion de joint profilé afin de faciliter la réalisation du vitrage, en particulier lorsque cette portion de joint profilé est fabriquée par une technique d'encapsulation.

Toutefois, la présente invention peut aussi être mise en œuvre dans le cas d'une portion de joint préfabriquée qui est ensuite adhésivée à l'élément vitré, avec de préférence une modification locale du profil général de la portion de joint à l'endroit prévu par la ou chaque patte ajourée.

On décrira ci-après, à titre d'exemples non limitatifs, plusieurs formes d'exécution de la présente invention, en référence aux dessins annexés sur lequel :
- la figure 1 illustre une vue partielle, en perspective et de l'intérieur, d'une première variante d'un vitrage selon l'invention lorsqu'une patte ajourée d'un enjoliveur est introduite dans le trou ménagé dans le cordon profilé ;
- la figure 2 est une vue partielle en coupe transversale du même vitrage qu'en figure 1 ;
- la figure 3 est une vue partielle, en perspective et de l'intérieur, du même vitrage qu'en figure 1 lorsque la patte ajourée de l'enjoliveur est rabattue sous la portion de joint profilé ;
- la figure 4 est une vue partielle en coupe transversale du même vitrage qu'en figure 3 ;
- la figure 5 est une vue partielle en coupe équivalente à la figure 4 illustrant le vitrage selon l'invention à l'état monté contre une portion de carrosserie ;
- la figure 6 est une vue partielle en coupe équivalente à la figure 1 pour une seconde variante de réalisation de l'invention ;
- la figure 7 est une vue partielle, en perspective et de dessous, d'un enjoliveur selon l'invention à deux pattes ajourées positionnées sur une aile d'un enjoliveur (les ailes étant rabattues, ici dans deux direction identiques et deux sens identiques, pour les besoins de l'illustration) ;
- la figure 8 est une vue partielle, en perspective et de l'intérieur, d'un vitrage comportant l'enjoliveur de la figure 7 avec les deux ailes rabattues dans deux direction identiques et deux sens identiques ;
- la figure 9 est une vue partielle, en perspective et de l'intérieur, d'un vitrage comportant l'enjoliveur de la figure 7 qui s'étend le long de deux bords opposés de l'élément vitré ;
- la figure 10 est une vue en coupe équivalente à la figure 1 pour une troisième variante de réalisation de l'invention à deux pattes ajourés portées par deux ailes différentes ; et
- la figure 11 est une vue partielle, en perspective et de dessous, d'un enjoliveur selon l'invention à deux pattes ajourées positionnées sur deux ailes différentes d'un enjoliveur (les ailes étant rabattues, ici dans deux direction identiques et deux sens opposés, pour les besoins de l'illustration).

Dans ces figures, les proportions entre les différents éléments sont respectées sur chaque figure mais les éléments en arrière-plan ne sont en général pas représentés, afin de faciliter leur lecture.

La présente invention se rapporte à un vitrage 1, et notamment un vitrage de véhicule, comprenant un élément vitré 2, au moins une portion de joint profilé 3 fixée à l'élément vitré, au moins une pièce rapportée, telle qu'un enjoliveur 4 fixé directement à ladite portion de joint profilé 3 ; il n'y a pas, pour l'invention, de pièce de fixation intermédiaire qui serait fixé d'une part à l'enjoliveur 4 et d'autre part à ladite portion de joint profilé 3, entre ces deux éléments.

Le vitrage 1 selon l'invention qui est illustré est un vitrage latéral arrière fixe d'une automobile (custode arrière). Il comporte un élément vitré 2 qui est muni d'une portion d'un cordon profilé 3 en un matériau polymère souple qui fait tout le tour de l'élément vitré 2.

Le vitrage 1, qui comporte éventuellement un (ou des) accessoire(s) et notamment un (ou des) accessoire(s) de fixation du vitrage, est destiné à fermer une baie réalisant une séparation entre un espace intérieur du véhicule et un espace extérieur au véhicule. L'élément vitré 2 présente ainsi une face extérieure 22 destinée à être tournée vers l'espace extérieur, une face intérieure 23 destinée à être tournée vers l'espace intérieur, ainsi qu'un chant 21 périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation (non illustrée).

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Sur les figures, l'élément vitré 2 est un vitrage monolithique. Le vitrage illustré est un vitrage fixe, mais la présente invention peut aussi s'appliquer à un vitrage mobile.

La portion de joint profilé 3 présente ainsi une face extérieure 31 qui est destinée à être orientée vers l'extérieur du véhicule, ainsi qu'une face intérieure 32 qui est destinée à être orientée vers l'intérieur du véhicule.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 est, de préférence, fabriqué par mise en œuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive du cordon profilé pendant l'étape de moulage de ce cordon.

Le cordon profilé 3 est, de préférence, disposé sur toute la périphérie du vitrage 1 mais ce cordon profilé pourrait tout à fait n'être positionné que sur une partie de la périphérie du vitrage ou sur une partie quelconque du vitrage.

L'enjoliveur 4 présente une forme allongée qui s'étend selon un bord dudit élément vitré et qui présente en section transversale une forme générale avec une base 40 et au moins une aile 41 s'étendant selon un angle non nul à partir de ladite base, ladite base étant située au-dessus d'une face extérieure 32 de ladite portion de joint profilé 3.

Sur les figures, l'enjoliveur 4 recouvre ainsi une portion de la face extérieure 32 du joint profilé et notamment un bossage 31.

C'est pour améliorer l'aspect esthétique du vitrage, qu'une partie du cordon profilé 3 visible de l'extérieur du véhicule est masquée par l'enjoliveur 4.

L'enjoliveur est préfabriqué : il a été fabriqué, et éventuellement mise en forme, préalablement à sa fixation au vitrage. Il peut être en aluminium, alliage d'aluminium, acier et notamment acier inoxydable.

Le matériau qui le constitue présente de préférence un module d'élasticité compris entre 60.10³ MPa et 250.10³ MPa afin de permettre d'appliquer manuellement une déformation plastique sur la ou les pattes ajourées.

L'enjoliveur présente une forme complexe : il présente en coupe transversale une forme avec une base 40 centrale et au moins une aile 41, 41' qui s'étend à partir de ladite base. Cette forme est positionnée à l'envers avec la base située au-dessus, ou précisément ici sur, la face extérieure de ladite portion de joint profilé 3 afin de recouvrir le bossage 31. La face intérieure 42 de l'enjoliveur est ainsi en contact avec la face extérieure 32 de la portion de joint profilé 3 au moins le long de la partie la plus à l'extérieure du bossage 31.

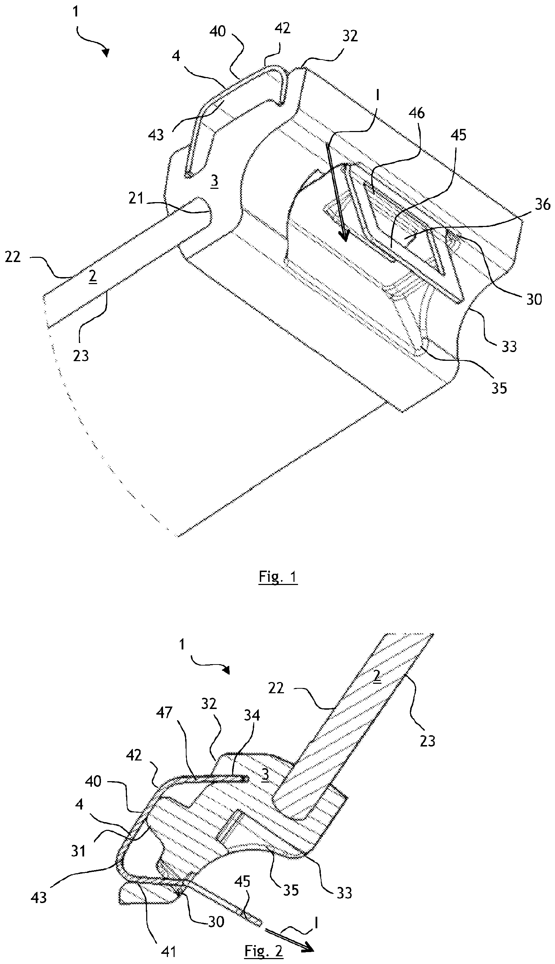

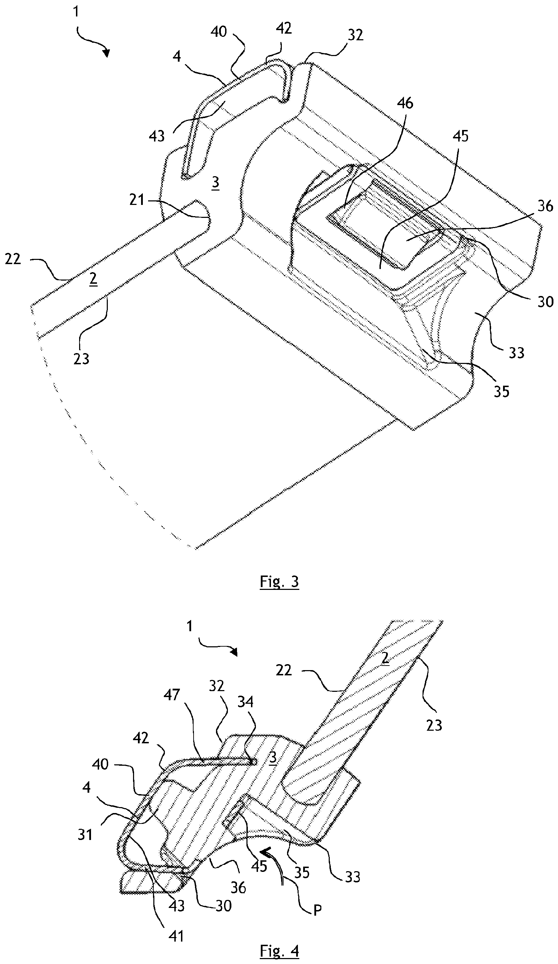

Selon l'invention, vu en coupe transversale (c'est-à-dire transversalement par rapport à ladite direction allongée de l'enjoliveur, comme en figures 2 et 4), une aile 41 distale de l'enjoliveur comporte à une extrémité opposée à la base 40 au moins une patte 45 ajourée et de préférence plusieurs pattes 45 ajourées.

La patte 45 ajourée, et de préférence chaque patte 45 ajourée, comporte ainsi un jour 46, visible en particulier en figure 1, ou autrement dit une lumière, c'est-à-dire un trou ménagé dans l'épaisseur de la patte ajourée.

Selon l'invention, lorsqu'il n'y a qu'une seule patte 45 ajourée, pour fixer l'enjoliveur 4 à la portion de joint profilé 3, la patte 45 ajourée est introduite, comme illustré par la flèche I en figures 1 et 2, dans ledit trou 30 préalablement formé de ladite portion de joint profilé 3 et la patte ajourée est ensuite rabattue sous ladite portion de joint profilé 3, comme illustré par la flèche P en figure 4, contre la face intérieure de la portion de joint profilé.

Le mouvement de rabat de la patte ajourée, qui s'apparente à un pliage, s'étend ici sur environ 90 °.

Il est possible aussi que la patte ajourée soit rabattue sous l'élément vitré (non illustré).

Selon l'invention, lorsqu'il y a plusieurs pattes 45 ajourées, pour fixer l'enjoliveur 4 à la portion de joint profilé 3, toutes les pattes 45 ajourées sont introduites ensemble, respectivement chacune dans chaque trou 30 préalablement formés de ladite portion de joint profilé 3 et les pattes sont ensuite rabattues chacune sous ladite portion de joint profilé 3, contre la face intérieure de la portion de joint profilé, ou sous ledit élément vitré.

Le trou 30, ou chaque trou 30, est, de préférence, formé lors de la fabrication de la portion de joint profilé 3 ; toutefois, comme ce(s) trou(s) est (sont) relativement simple(s) car c'est une (ce sont des) simple(s) fente(s), il est possible de le(s) réaliser postérieurement à la fabrication de la portion de joint profilé.

Comme visible sur les figures, la patte 45 ajourée, ou chaque patte ajourée, est dans le prolongement de l'aile qui la porte et elle est ici, de préférence venue de matière avec l'aile qui la porte ; l'enjoliveur est, ici en une pièce de métal unique, constitué d'une feuille métallique simple (non doublée) d'une épaisseur par exemple de 0,4 mm à 2 mm, pliée, cette pièce de métal étant en outre ajourée au centre de ladite patte ajourée ou au centre de chaque patte ajourée s'il y en a plusieurs.

Le jour 46 présente une forme de rectangle, mais il pourrait aussi présenter une forme de carré, de rond, ou de portion de rond (par exemple un demi-rond). Les coins du carré sont arrondis pour augmenter la capacité de retenue de ladite patte, sans risquer d'endommager la matière de la portion de joint profilé.

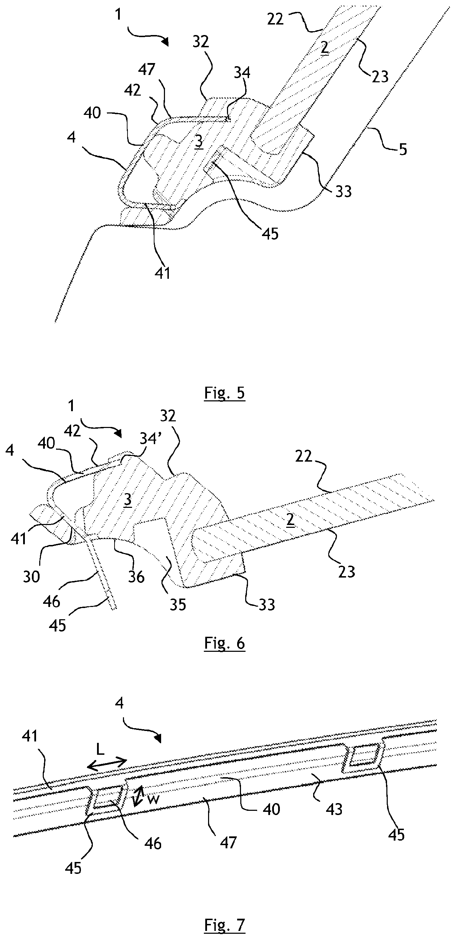

La figure 5 montre que, en proportion, l'épaisseur du cordon profilé 3 est relativement faible ; ceci illustre en particulier l'intérêt de l'invention pour les configurations où l'espace disponible entre le chant 21 de l'élément vitré et la carrosserie adjacente 6 est petit.

Comme visible sur la figure 7, la patte 45 ajourée, ou chaque patte ajourée, présente de préférence une longueur L comprise entre 1 et 5 fois sa largeur w.

Les figures montrent par ailleurs que la portion de joint profilé 3 présente en face intérieure 33 un creux 35 de forme complémentaire d'un pourtour de ladite patte 45 ajourée rabattue sous ladite portion de joint profilé 3 afin de diminuer l'encombrement.

Ce creux 35 comporte en outre ici une bosse 36 de contour complémentaire au jour 46 de ladite patte 45 ajourée et plus précisément complémentaire au contour du jour 46. L'épaisseur de cette bosse est de préférence au moins égale, et de préférence supérieure, à l'épaisseur de la patte ajourée.

Lors du rabat d'une patte ajourée, l'important est que la patte ajourée soit rabattue de telle sorte qu'elle soit située à l'intérieur du profil général du cordon profilé.

Les figures 2 et 4 montrent par ailleurs que, vu en coupe transversale à l'endroit de la présence d'une patte ajourée, selon une première variante de réalisation de l'invention, l'enjoliveur 4 présente une forme générale de U, avec une première aile 41 qui comporte au moins une patte 45 ajourée et une seconde aile 47 du U de l'enjoliveur qui pénètre dans une cavité 34 ménagée sur la face extérieure 32 de ladite portion de joint profilé 3, ladite cavité ne débouchant pas sur la face intérieure 33 de ladite portion de joint profilé 3.

Cette seconde aile 47 est, de préférence, l'aile du U proximale, qui est la plus proche de l'élément vitré à l'état monté et ladite première aile 41 est alors l'aile du U distale, la plus éloignée de l'élément vitré à l'état monté afin que l'aile distale soit plus facile à rabattre sous ladite portion de joint profilé 3 ; toutefois, il est possible de réaliser l'inverse.

Après le rabat de la patte ajourée 45 contre la face intérieure 33, l'enjoliveur est maintenu en pincement entre cette face intérieure 33 (par la patte ajourée 45 qui est dans le creux 35 avec la bosse 36 qui est dans le jour 46) et la cavité 34.

La figure 5 montre une seconde variante, vue en coupe transversale à l'endroit de la présence d'une patte ajourée, pour laquelle l'enjoliveur 4 présente une forme générale de L, avec la base 40 qui pénètre dans une cavité 34' ménagée sur la face extérieure 32 de la portion de joint profilé 3, cette cavité 34' ne débouchant pas sur la face intérieure 33 de la portion de joint profilé 3.

La figure 5 illustre une réalisation selon laquelle la patte ajourée 45 est rabattue sous la portion de joint profilé 3, mais avant que cette patte ajourée ne soit rabattue ; le rabat est le même que pour la première variante.

Après le rabat de la patte ajourée 45 contre la face intérieure 33, l'enjoliveur est maintenu en pincement entre cette face intérieure 33 (par la patte ajourée 45 qui est dans le creux 35 avec la bosse 36 qui est dans le jour 46 et la cavité 34'.

Comme le montre la figure 7, il est possible qu'une première aile 41 comporte plusieurs pattes ajourées 45.

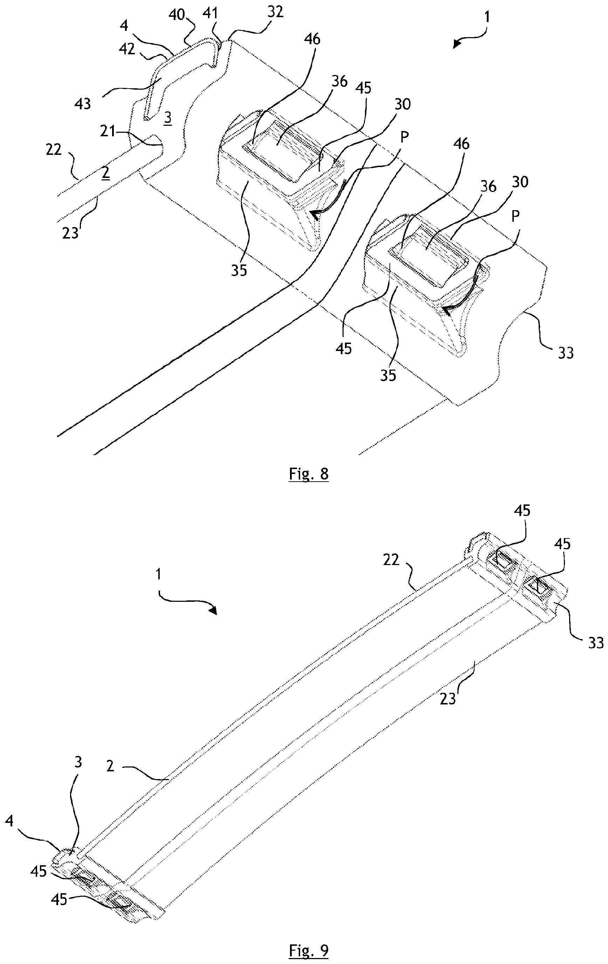

Sur cette figure 7, la portion d'enjoliveur est illustrée rectiligne. La figure 8, qui est une vue de dessous de l'enjoliveur de la figure 7 à l'état installé, montre que le mouvement P de rabat des pattes ajourées est orienté de la même manière dans l'espace et est opéré dans le même sens.

Toutefois, il est tout à fait possible que l'enjoliveur soit courbe et soit présent sur deux côtés adjacents de l'élément vitré, voire sur trois côtés de l'élément vitré, voire même tout autour de l'élément vitré.

Il est alors possible d'optimiser le maintien réalisé par les pattes ajourées en fonction de leurs positions respectives dans l'espace afin d'avoir un maintien dans les trois dimensions de l'espace.

La figure 9 illustre le maintien le long de deux bords opposés d'un élément vitré d'un enjoliveur 4 unique ; sur cette figure, quatre pattes ajourées sont illustrées. Dans cette configuration, le mouvement de rabat des pattes ajourées est orienté de la même manière dans l'espace et est opéré dans la même direction mais dans la partie basse (à gauche de la figure) il est opéré dans le sens contraire de la partie haute.

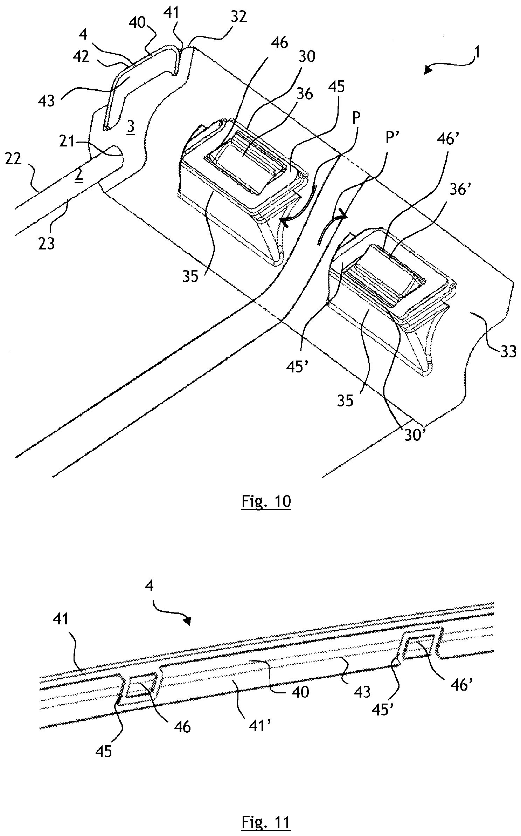

Les figures 10 et 11 montrent une troisième variante de l'invention, vue en coupe transversale à l'endroit de la présence d'une patte ajourée, pour laquelle l'enjoliveur 4 présente une forme générale de U, avec
- come pour la première variante, une première aile 41 qui comporte à une extrémité opposée à ladite base 40 au moins une première patte 45 ajourée, la première patte 45 ajourée traversant la portion de joint profilé 3 par un trou 30 débouchant sur la face extérieure 32 et sur la face intérieure 33 de la portion de joint profilé 3, ladite première patte 45 ajourée étant rabattue sous ladite portion de joint profilé 3, et
- une seconde aile 41' qui comporte elle aussi, à une extrémité opposée à ladite base 40 au moins une seconde patte 45' ajourée, la seconde patte 45' ajourée traversant aussi la portion de joint profilé 3 par un trou 30' similaire au trou 30 sauf qu'il n'est pas positionné au même endroit par rapport à l'élément vitré et débouchant sur la face extérieure 32 et sur la face intérieure 33 de la portion de joint profilé 3, la seconde patte 45' ajourée étant rabattue sous ladite portion de joint profilé 3.

Les figures 10 et 11 montrent que la patte 45' ajourée de la seconde aile 41' est rabattue selon un mouvement P' dans la même direction mais dans un sens opposé au mouvement P de rabat de la patte 45 ajourée de la première aile 41 ; toutefois, il est possible que la patte 45' ajourée de la seconde aile 41' soit rabattue dans la même direction et dans le même sens que de la patte 45 ajourée de la première aile 41 ; dans ce cas, par exemple, la patte 45' ajourée de la seconde aile 41' peut être rabattue sous l'élément vitré 2.

## Revendications

1. Vitrage (1) comprenant un élément vitré (2), au moins une portion de joint profilé (3), au moins un enjoliveur (4) présentant une forme allongée qui s'étend selon un bord dudit élément vitré et qui présente en section transversale une forme générale avec une base (40) et au moins une aile (41) s'étendant selon un angle non nul à partir de ladite base, ladite base étant située au-dessus d'une face extérieure (32) de ladite portion de joint profilé (3), vu en coupe transversale, une aile (41) comportant à une extrémité opposée à ladite base (40) au moins une patte (45) ajourée, **caractérisé en ce que** ladite patte (45) ajourée traverse ladite portion de joint profilé (3) par un trou (30) débouchant sur ladite face extérieure (32) et sur une face intérieure (33) de ladite portion de joint profilé (3), ladite patte (45) ajourée étant rabattue sous ladite portion de joint profilé (3) ou sous ledit élément vitré (2).

2. Vitrage (1) suivant la revendication 1, **caractérisé en ce que** ladite patte (45) ajourée s'étend en forme d'arc de couronne ou en forme de rectangle ajouré ou de carré ajouré.

3. Vitrage (1) suivant la revendication 1 ou 2, **caractérisé en ce que** ladite patte (45) ajourée présente une longueur comprise entre 1 et 5 fois sa largeur.

4. Vitrage (1) suivant l'une quelconque des revendications 1 à 3, **caractérisé en ce que** ladite portion de joint profilé (3) présente en face intérieure (33) un creux (35) de forme complémentaire d'un pourtour de ladite patte (45) ajourée rabattue sous ladite portion de joint profilé (3).

5. Vitrage (1) suivant la revendication 4, **caractérisé en ce que** ledit creux (35) comporte une bosse (36) de contour complémentaire d'un jour (46) de ladite patte (45) ajourée.

6. Vitrage (1) suivant l'une quelconque des revendications 1 à 5, **caractérisé en ce que,** vu en coupe transversale, ledit enjoliveur (4) présente une forme générale de U, avec une première aile (41) qui comporte au moins une patte (45) ajourée et une seconde aile (47) qui pénètre dans une cavité (34) ménagée sur la face extérieure (32) de ladite portion de joint profilé (3) et ne débouchant pas sur la face intérieure (33) de ladite portion de joint profilé (3).

7. Vitrage (1) suivant l'une quelconque des revendications 1 à 6, **caractérisé en ce que,** vu en coupe transversale, ledit enjoliveur (4) présente une forme générale de L, avec la base (40) qui pénètre dans une cavité (34') ménagée sur la face extérieure (32) de ladite portion de joint profilé (3) et ne débouchant pas sur la face intérieure (33) de ladite portion de joint profilé (3).

8. Vitrage (1) suivant l'une quelconque des revendications 1 à 7, **caractérisé en ce que,** vu en coupe transversale, ledit enjoliveur (4) présente une forme générale de U, avec
- une première aile (41) qui comporte à une extrémité opposée à ladite base (40) au moins une première patte (45) ajourée, ladite première patte (45) ajourée traversant ladite portion de joint profilé (3) par un trou (30) débouchant sur une face extérieure (32) et sur une face intérieure (33) de ladite portion de joint profilé (3), ladite première patte (45) ajourée étant rabattue sous ladite portion de joint profilé (3) ou sous ledit élément vitré (2), et
- une seconde aile (41') qui comporte à une extrémité opposée à ladite base (40) au moins une seconde patte (45') ajourée, ladite seconde patte (45') ajourée traversant ladite portion de joint profilé (3) par un trou (30') débouchant sur une face extérieure (32) et sur une face intérieure (33) de ladite portion de joint profilé (3), ladite seconde patte (45') ajourée étant rabattue sous ladite portion de joint profilé (3) ou sous ledit élément vitré (2),
la patte (45') ajourée de la seconde aile (41') étant, de préférence, rabattue dans un sens opposé de la patte (45) ajourée de la première aile (41).

9. Vitrage (1) suivant l'une quelconque des revendications 1 à 8, **caractérisé en ce que,** vu en coupe transversale, une face intérieure (43) dudit enjoliveur (4) est située contre un bossage (31) réalisé en face extérieure (32) de ladite portion de joint profilé (3).

10. Procédé de fabrication d'un vitrage (1) suivant l'une quelconque des revendications 1 à 9, ledit vitrage comprenant un élément vitré (2), au moins une portion de joint profilé (3), au moins un enjoliveur (4) présentant une forme allongée qui s'étend selon un bord dudit élément vitré et en section transversale une forme avec une base (40) et au moins une aile (41) s'étendant à partir de ladite base, ladite portion de joint profilé (3) présentant un trou (30) formé préalablement et débouchant sur une face extérieure (32) et sur une face intérieure (33) de ladite portion de joint profilé (3) **et en ce que,** vu en coupe transversale, une aile (41) comporte à une extrémité opposée à ladite base (40) au moins une patte (45) ajourée, **caractérisé en ce que** ladite patte (45) ajourée est introduite dans ledit trou (30) préalablement formé de ladite portion de joint profilé (3) et est ensuite rabattue sous ladite portion de joint profilé (3) ou sous ledit élément vitré (2).

## Patentansprüche

1. Glasscheibe (1), die ein Glaselement (2), mindestens einen Strukturdichtungsabschnitt (3), mindestens ein Verkleidungsteil (4), das eine längliche Form aufweist, das sich entlang einer Kante des Glaselements erstreckt und das im Querschnitt eine allgemeine Form mit einer Basis (40) und mindestens einem Flügel (41) aufweist, der sich in einem Winkel ungleich Null ab der Basis erstreckt, wobei sich die Basis oberhalb einer Außenfläche (32) des Strukturdichtungsabschnitts (3) befindet, im Querschnitt gesehen, wobei ein Flügel (41) an einem Ende, das der Basis (40) entgegengesetzt ist, mindestens eine durchbrochene Pratze (45) aufweist, **dadurch gekennzeichnet, dass** die durchbrochene Pratze (45) den Strukturdichtungsabschnitt (3) durch ein Loch (30) durchquert, das auf der Außenfläche (32) und auf einer Innenfläche (33) des Strukturdichtungsabschnitts (3) mündet, wobei die durchbrochene Pratze (45) unter den Strukturdichtungsabschnitt (3) oder unter das Glaselement (2) geklappt ist.

2. Glasscheibe (1) nach Anspruch 1, **dadurch gekennzeichnet, dass** sich die durchbrochene Pratze (45) in Form eines Kranzbogens oder in Form eines durchbrochenen Rechtecks oder eines durchbrochenen Quadrats erstreckt.

3. Glasscheibe (1) nach Anspruch 1 oder 2, **dadurch gekennzeichnet, dass** die durchbrochene Pratze (45) eine Länge aufweist, die zwischen dem 1- und 5-fachen ihrer Breite liegt.

4. Glasscheibe (1) nach einem der Ansprüche 1 bis 3, **dadurch gekennzeichnet, dass** der Strukturdichtungsabschnitt (3) an der Innenfläche (33) eine Vertiefung (35) mit komplementärer Form zu einem Umfang der durchbrochenen Pratze (45) aufweist, die unter den Strukturdichtungsabschnitt (3) geklappt ist.

5. Glasscheibe (1) nach Anspruch 4, **dadurch gekennzeichnet, dass** die Vertiefung (35) einen Höcker (36) mit Kontur, die zu einer Öffnung (46) der durchbrochenen Pratze (45) komplementär ist, umfasst.

6. Glasscheibe (1) nach einem der Ansprüche 1 bis 5, **dadurch gekennzeichnet, dass** das Verkleidungsteil (4) im Querschnitt gesehen eine allgemeine U-Form aufweist, mit einem ersten Flügel (41), der mindestens eine durchbrochene Pratze (45) umfasst, und einem zweiten Flügel (47), der in einen Hohlraum (34) eindringt, der auf der Außenfläche (32) des Strukturdichtungsabschnitts (3) ausgebildet ist und nicht auf der Innenfläche (33) des Strukturdichtungsabschnitts (3) mündet.

7. Glasscheibe (1) nach einem der Ansprüche 1 bis 6, **dadurch gekennzeichnet, dass** das Verkleidungsteil (4) im Querschnitt gesehen eine allgemeine L-Form aufweist, mit der Basis (40), die in einen Hohlraum (34') eindringt, der auf der Außenfläche (32) des Strukturdichtungsabschnitts (3) ausgebildet ist und nicht auf der Innenfläche (33) des Strukturdichtungsabschnitts (3) mündet.

8. Glasscheibe (1) nach einem der Ansprüche 1 bis 7, **dadurch gekennzeichnet, dass** das Verkleidungsteil (4) im Querschnitt gesehen eine allgemeine U-Form aufweist, mit
- einem ersten Flügel (41), der an einem Ende, das der Basis (40) entgegengesetzt ist, mindestens eine erste durchbrochenen Pratze (45) aufweist, wobei die erste durchbrochene Pratze (45) den Strukturdichtungsabschnitt (3) durch ein Loch (30) durchquert, das auf einer Außenfläche (32) und auf einer Innenfläche (33) des Strukturdichtungsabschnitts (3) mündet, wobei die erste durchbrochene Pratze (45) unter den Strukturdichtungsabschnitt (3) oder unter das Glaselement (2) geklappt ist, und
- einen zweiten Flügel (41'), der an einem Ende, das der Basis (40) entgegengesetzt ist, mindestens eine zweite durchbrochenen Pratze (45') aufweist, wobei die zweite durchbrochene Pratze (45') den Strukturdichtungsabschnitt (3) durch ein Loch (30'), das auf einer Außenfläche (32) und auf einer Innenfläche (33) des Strukturdichtungsabschnitts (3) mündet, durchquert, wobei die zweite durchbrochene Pratze (45') unter den Strukturdichtungsabschnitt (3) oder unter das Glaselement (2) geklappt ist,
wobei die durchbrochene Pratze (45') des zweiten Flügels (41') vorzugsweise in eine Richtung, die zu der durchbrochenen Pratze (45) des ersten Flügels (41) entgegengesetzt ist, geklappt ist.

9. Glasscheibe (1) nach einem der Ansprüche 1 bis 8, **dadurch gekennzeichnet, dass** sich, im Querschnitt gesehen, eine Innenfläche (43) des Verkleidungsteils (4) gegen einen Höcker (31) legt, der an der Außenfläche (32) des Strukturdichtungsabschnitts (3) hergestellt ist.

10. Verfahren zur Herstellung einer Glasscheibe (1) nach einem der Ansprüche 1 bis 9, wobei die Glasscheibe ein Glaselement (2), mindestens einen Strukturdichtungsabschnitt (3), mindestens ein Verkleidungsteil (4), das eine längliche Form aufweist, die sich entlang einer Kante des Glaselements erstreckt und im Querschnitt eine allgemeine Form mit einer Basis (40) und mindestens einem Flügel (41) aufweist, der sich ab der Basis erstreckt, wobei der Strukturdichtungsabschnitt (3) ein Loch (30) aufweist, das zuvor ausgebildet wurde und auf einer Außenfläche (32) und auf einer Innenfläche (33) des Strukturdichtungsabschnitts (3) mündet, **und dass,** im Querschnitt gesehen, ein Flügel (41) an einem Ende, das der Basis (40) entgegengesetzt ist, mindestens eine durchbrochene Pratze (45) umfasst, **dadurch gekennzeichnet, dass** die durchbrochene Pratze (45) in das zuvor ausgebildete Loch (30) des Strukturdichtungsabschnitts (3) eingeführt und danach unter den Strukturdichtungsabschnitt (3) oder unter das Glaselement (2) geklappt wird.

## Claims

1. A glass pane (1) comprising a glazed element (2), at least one profiled joint portion (3), at least one trim (4) which has an elongate shape which extends along an edge of the glazed element and which has in cross-section a general shape having a base (40) and at least one wing (41) which extends from the base at an angle which is not equal to zero, the base being located above an outer face (32) of the profiled joint portion (3), when viewed in cross-section, a wing (41) comprising at an end opposite the base (40) at least one openwork lug (45), **characterized in that,** the openwork lug (45) extends through the profiled joint portion (3) via a hole (30) which opens at the outer face (32) and at an inner face (33) of the profiled joint portion (3), the openwork lug (45) being folded over below the profiled joint portion (3) or below the glazed element (2).

2. The glass pane (1) as claimed in claim 1, **characterized in that** the openwork lug (45) extends in the form of an annular arc or in the form of an openwork rectangle or an openwork square.

3. The glass pane (1) as claimed in claim 1 or 2, **characterized in that** the openwork lug (45) has a length of between 1 and 5 times the width thereof.

4. The glass pane (1) as claimed in one of claims 1 to 3, **characterized in that** the profiled joint portion (3) has at the inner face (33) a hollow portion (35) having a shape which complements a periphery of the openwork lug (45) which is folded over below the profiled joint portion (3).

5. The glass pane (1) as claimed in claim 4, **characterized in that** the hollow portion (35) comprises a protrusion (36) which has a contour which complements an aperture (46) of the openwork lug (45).

6. The glass pane (1) as claimed in one of claims 1 to 5, **characterized in that,** when viewed in cross-section, the trim (4) is generally U-shaped, with a first wing (41) which comprises at least one openwork lug (45) and a second wing (47) which is introduced into a cavity (34) which is provided in the outer face (32) of the profiled joint portion (3) and which does not open at the inner face (33) of the profiled joint portion (3).

7. The glass pane (1) as claimed in one of claims 1 to 6, **characterized in that,** when viewed in cross-section, the trim (4) is generally L-shaped, with the base (40) which is introduced into a cavity (34') which is provided in the outer face (32) of the profiled joint portion (3) and which does not open at the inner face (33) of the profiled joint portion (3).

8. The glass pane (1) as claimed in one of claims 1 to 7, **characterized in that,** when viewed in cross-section, the trim (4) is generally U-shaped, having
- a first wing (41) which comprises at an end opposite the base (40) at least a first openwork lug (45), the first openwork lug (45) extending through the profiled joint portion (3) via a hole (30) which opens at an outer face (32) and at an inner face (33) of the profiled joint portion (3), the first openwork lug (45) being folded over below the profiled joint portion (3) or below the glazed element (2), and
- a second wing (41') which comprises at an end opposite the base (40) at least a second openwork lug (45'), the second openwork lug (45') extending through the profiled joint portion (3) via a hole (30') which opens at an outer face (32) and at an inner face (33) of the profiled joint portion (3), the second openwork lug (45') being folded over below the profiled joint portion (3) or below the glazed element (2),
the openwork lug (45') of the second wing (41') preferably being folded over in an opposite sense to the openwork lug (45) of the first wing (41).

9. The glass pane (1) as claimed in one of claims 1 to 8, **characterized in that,** when viewed in cross-section, an inner face (43) of the trim (4) is located against a protrusion (31) which is produced at the outer face (32) of the profiled joint portion (3).

10. A production method for a glass pane (1) as claimed in one of claims 1 to 9, the glass pane comprising a glazed element (2), at least one profiled joint portion (3), at least one trim (4) which has an elongate shape which extends along an edge of the glazed element and which has in cross-section a shape which has a base (40) and at least one wing (41) which extends from the base, the profiled joint portion (3) having a previously formed hole (30) which opens at an outer face (32) and at an inner face (33) of the profiled joint portion (3) **and in that,** when viewed in cross-section, a wing (41) comprises at an end opposite the base (40) at least one openwork lug (45), **characterized in that** said openwork lug (45) is introduced into the previously formed hole (30) of the profiled joint portion (3) and is then folded over below the profiled joint portion (3) or below the glazed element (2).
